# EUROPEAN PATENT SPECIFICATION

(11) **EP 3 746 399 B1**
(45) Date of publication and mention of the grant of the patent: **06.03.2024**
(21) Application number: 19705000.8
(22) Date of filing: 29.01.2019
(51) Int. Cl.: C01B 21/09, A01N 59/00, A01N 33/02, C02F 1/50, C01B 21/083, C02F 1/76, C02F 103/02, C02F 103/16, C02F 103/24, C02F 103/28, C02F 103/32, C02F 103/42

(54) **METHODS TO PREPARE HALOAMINES USING AT LEAST ONE SOLID REACTANT AND PRODUCTS MADE THEREFROM**
VERFAHREN ZUR HERSTELLUNG VON HALOAMINEN UNTER VERWENDUNG VON MINDESTENS EINEM FESTEN REAKTANTEN UND DARAUS HERGESTELLTE PRODUKTE
MÉTHODES DE PRÉPARATION D'HALOAMINES À L'AIDE D'AU MOINS UN RÉACTIF SOLIDE ET PRODUITS FABRIQUÉS À PARTIR DE CEUX-CI

(30) Priority: 31.01.2018 US 201862624186 P
(43) Date of publication of application: 09.12.2020
(73) Proprietor: Buckman Laboratories International, Inc., Memphis, TN 38108 (US)
(72) Inventor: LAUNAY, Bruno, Memphis, TN 38108-0305 (US); KUZNETSOV, Dimitri, Memphis, TN 38108-0305 (US); HENSON, Christina, Memphis, TN 38108-0305 (US); ONDERBEKE, Nikolaas, Memphis, TN 38108-0305 (US); CONYNGHAM, Mark, Memphis, TN 38108-0305 (US); MCNEEL, Thomas, Memphis, TN 38108-0305 (US)
(74) Representative: Dehns
(86) International application number: PCT/US2019/015499
(87) International publication number: WO 2019/152332

(56) References cited:
- EP-A1- 2 944 615
- EP-B1- 1 928 784
- US-A1- 2015 329 387

## Description

### BACKGROUND OF THE INVENTION

The present invention relates to haloamines such as monochloramine in solution, and methods to prepare same.

Many industrial materials and media when wet or subjected to treatment in water are susceptible to bacterial, fungal, and/or algal deterioration or degradation. A large variety of commercial, industrial, agricultural, and wood materials or products are subject to microbiological attack or degradation which reduces or destroys their economic value. These industrial materials and media include, but are not limited to, for example, wood pulp, wood chips, lumber, adhesives, coatings, animal hides, paper mill liquors, pharmaceutical formulations, cosmetic formulations, toiletry formulations, geological drilling lubricants, petrochemicals, agrochemical compositions, paints, leathers, plastics, seeds, plants, wood, metalworking fluids, cooling water, recreational water, influent plant water, waste water, pasteurizers, retort cookers, tanning liquors or solutions, starch, proteinaceous materials, acrylic latex paint emulsions, and textiles. The various temperatures at which such materials or products are manufactured, stored, or used as well as their intrinsic characteristics make them susceptible to growth, attack, and degradation by common microorganisms such as algae, fungi, yeasts, and bacteria. These microorganisms may be introduced during a manufacturing or other industrial process, by exposure to air, tanks, pipes, equipment, and humans. They can also be introduced while using a material or product, for example, by multiple openings and reclosures of packages or from stirring or removing material with contaminated objects.

To control deterioration or degradation caused by microorganisms, various industrial microbicides are used. Workers in the trade have continued to seek improved biocides that have low toxicity, are cost effective, and are also capable of exhibiting a prolonged biocidal effect against a wide variety of microorganisms with regular use.

Aqueous systems are also highly subject to microbiological growth, attack, and degradation. These aqueous systems may be fresh, brackish or saltwater systems. Exemplary aqueous systems include, but are not limited to, latexes, surfactants, dispersants, stabilizers, thickeners, adhesives, starches, waxes, proteins, emulsifying agents, cellulose products, metal working fluids, cooling water, waste water, aqueous emulsions, aqueous detergents, coating compositions, paint compositions, and resins formulated in aqueous solutions, emulsions or suspensions. These systems frequently contain relatively large amounts of water and organic material causing them to be environments well-suited for microbiological growth and thus attack and degradation.

Microbiological degradation of aqueous systems may manifest itself as a variety of problems, such as loss of viscosity, gas formation, objectionable odors, decreased pH, emulsion breaking, color change, and gelling. Additionally, microbiological deterioration of aqueous systems can cause fouling of the related water-handling system, which may include cooling towers, pumps, heat exchangers, and pipelines, heating systems, scrubbing systems, and other similar systems.

One biocide treatment used to treat or control microorganisms is chloramine solutions, and primarily monochloramine solutions. Biocidal chloramine solutions can be formed by reacting dilute ammonia solution or at least one ammonium salt or other nitrogen source with at least one chlorine-containing oxidant. The respective parent reagents are commonly available as concentrated solutions. When used, at the site of where the chloramine will be used, these parent solutions are stored near a generator in which they are combined in defined proportions to form the biocide treatment. In order to produce the biocide of the highest efficacy and in a safe manner, sophisticated hardware and software are needed to operate the generators. Similar issues exists with haloamines in general.

The efficacy of the prepared haloamines such as a prepared chloramine based biocide depends on the concentration of the active materials in the parent solutions. One deficiency of the traditional method is that if the actives concentrations change over time, for example, due to aging, a reproducible production of an efficacious chloramine biocide becomes practically impossible.

In the past approaches, the concentrations of the parent solutions utilized are typically high, to reduce the delivery costs. As a result, another deficiency of the conventional methods is that the operators must deal with, for example, hypochlorite solutions bearing NFPA health rating as high as 3 (short exposure could cause serious temporary or moderate residual injury). Furthermore, the products of hypochlorite aging decomposition, such as chlorite and chlorate ions, can represent additional hazards.

Combining the parent solutions incorrectly, due to human error or equipment malfunction, can result in a strong exothermic reaction that could cause equipment damage and/or fire. To avoid these problems, a significant amount of water is needed to pre-dilute the parent solutions to safe levels. This reduces the utility of the current methods in the locations where water is scarce.

Accordingly, there is a need to provide methods that can avoid or minimize the challenges that the conventional methods faced. Also, there is a need to provide a method to form monochloramine solutions that is more economical and safer than those commonly practiced.

EP2944615 A1 discloses a sanitary warm water system and method for the disinfection of sanitary warm water. US2015/0329387 discloses systems and methods for the on-site generation of haloamines such as chloramines and/or bromoamines. EP1928784 B1 discloses methods to produce mixtures of haloamines to control growth of microorganisms in aqueous systes, more particularly in industrial process waters, and most particularly in pulp and paper process systems.

### SUMMARY OF THE INVENTION

It is a feature of this invention to provide a process to form haloamine solutions using at least one solid ingredient or reagent at the site of use.

It is also a feature of this invention to provide a process to form monochloramine solutions using at least one solid ingredient or reagent at the site of use.

Additional features and advantages of various embodiments will be set forth in part in the description that follows, and in part will be apparent from the description, or may be learned by practice of various embodiments. The objectives and other advantages of various embodiments will be realized and attained by means of the elements and combinations particularly pointed out in the description and appended claims.

To achieve these and other advantages and in accordance with the purposes of the present invention, as embodied and broadly described herein, the present invention relates to a method as defined in claim 1 to prepare a haloamine or mixture thereof in solution. The method includes the steps of dissolving at least one solid halogen releaser in a first aqueous solution to form a dilute first reactant. The method also includes preparing a second reactant of free ammonia or ammonium ion in a second aqueous solution to form a dilute second reactant. The method further includes combining the dilute first reactant and the dilute second reactant to form said haloamine in solution, wherein said haloamine comprises a monochloramine. The solid halogen releaser comprises a solid chlorine releaser, the concentration of chlorine releaser in said first aqueous solution is from about 0.01 wt% to about 10 wt%, and concentration of said ammonia or ammonium ion in said second aqueous solution is from about 0.01 wt% to about 20 wt%. The haloamine can be one haloamine in solution or can be a mixture of two or more haloamines in solution.

It is to be understood that both the foregoing general description and the following detailed description are exemplary and explanatory only and are only intended to provide a further explanation of the present invention, as claimed.

The accompanying drawings, which are incorporated in and constitute a part of this application, illustrate some of the features of the present invention and together with the description, serve to explain the principles of the present invention.

### BRIEF DESCRIPTION OF DRAWINGS

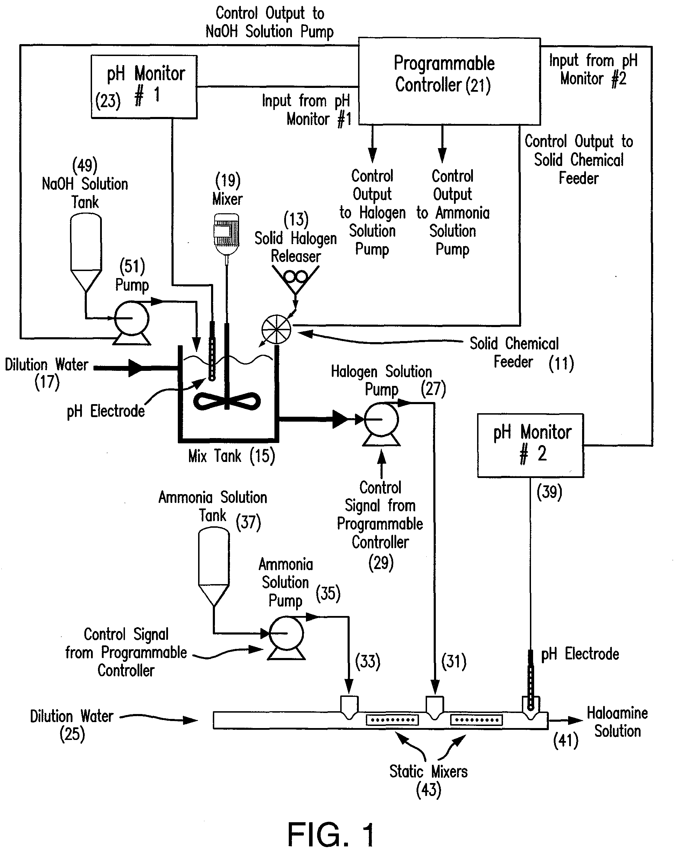

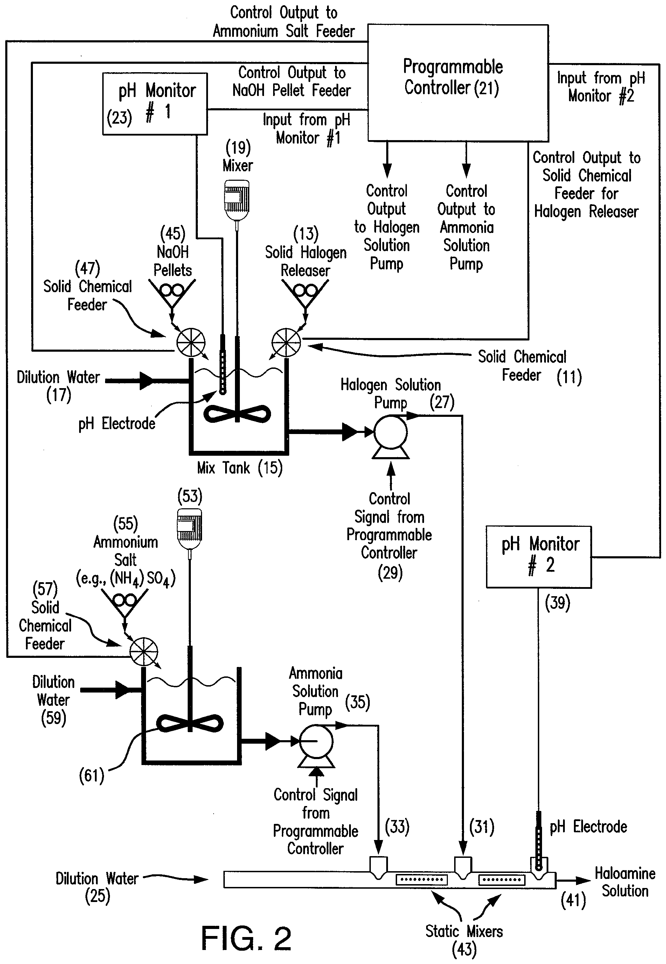

FIG. 1 and FIG. 2 are schematic diagrams showing optional set-ups for a system to practice the present invention to form a haloamine such as a monochloramine and/or other haloamines.

### DETAILED DESCRIPTION

The present invention provides methods as defined in claim 1 to prepare haloamine in solution using at least one solid reactant or ingredient. Particularly, the method comprises, consists essentially of, consists of, or includes
a) dissolving at least one solid halogen releaser in a first aqueous solution to form a dilute first reactant;
b) preparing a second reactant of free ammonia or ammonium ion in a second aqueous solution to form a dilute second reactant; and
c) combining the dilute first reactant and the dilute second reactant to form the haloamine in solution;
wherein said haloamine comprises a monochloramine, said solid halogen releaser comprises a solid chlorine releaser, and wherein concentration of chlorine releaser in said first aqueous solution is from about 0.01 wt% to about 10 wt% and concentration of said ammonia or ammonium ion in said second aqueous solution is from about 0.01 wt% to about 20 wt%.

In the present invention, the solid halogen releaser comprises a solid chlorine releaser. The solid halogen releaser can be a solid chlorine releaser of one type or can be a combination of a solid chlorine releaser and one or more different solid halogen releasers. The solid halogen releaser is a solid at room temperature (25 deg C). If more than one type of solid halogen releaser is used in step a), the multiple halogen releasers should preferably not react with each other. For purposes of the present invention, a solid halogen releaser is understood to be a composition, compound, or polymer that is dissolvable in water and has the ability to release a halogen ion in solution and be replaced by a different atom, typically a hydrogen atom, which generally is from the free ammonia or ammonium ion, once the two solutions are combined. The solid halogen releaser comprises a solid chlorine releaser, optionally in combination with a solid bromine releaser or solid iodine releaser or any combinations thereof. The solid halogen releaser can be a composition, compound, or polymer that has two or more different types of halogen atoms or substituents such that the halogen released in solution is two or more halogens. For instance, the composition, compound, or polymer can have bromo and chloro atoms or substituents such that bromine and chlorine are released in solution as part of the process of the present invention.

As a more particular example, the solid chlorine releaser can be of one type or can be two or more different solid chlorine releasers. The solid chlorine releaser is a solid at room temperature (25 deg C). If more than one type of solid chlorine releaser is used in step a), the multiple chlorine releasers should preferably not react with each other. For purposes of the present invention, a solid chlorine releaser is understood to be a composition, compound, or polymer that is dissolvable in water and has the ability to release a chlorine ion in solution and be replaced by a different atom, typically a hydrogen atom, which generally is from the free ammonia or ammonium ion, once the two solutions are combined.

Examples of solid chlorine releasers that can be used in the present invention include, but are not limited to, calcium hypochlorite, trichloroisocyanuric acid, sodium dichloroisocyanurate, dichlorodimethylhydantoin, Chloramine T, Chloramine B, or N-chlorosuccinimide, or any combinations thereof. Each of these chlorine releasers are commercially available.

Examples of solid bromine releasers that can be used in the present invention include, but are not limited to, 1,3-dibromo-5,5-dimethylhydantoin (DBDMH). One such example is BULAB 6133 from Buckman Laboratories, Int'l. An example of a solid halogen releaser that has two different halogen atoms or substituents that can be released is 1-bromo-3-chloro-5,5-dimethylhydantoin (BCDMH). An example of such a solid dual halogen releaser is BULAB 6058 from Buckman Laboratories, Int'l.

The solid halogen releaser such as a solid chlorine releaser or solid dual bromine/chlorine releaser, can be dissolved in the first aqueous solution as a powder, agglomerates, pellets, bricks, or in other solid shapes. The solid halogen releaser can be dissolved initially to form a highly concentrated solution that can then be diluted further. Or, the solid halogen releaser can be dissolved to a dilution that is combined with the other reactant(s). The concentration of the halogen releaser (e.g., chlorine releaser) in the first aqueous solution can be from about 0.01 wt% to about 1 wt% (e.g., 0.1 wt% to 1 wt%, 0.5 wt% to 1 wt%) or other amounts. The solid halogen releaser can be metered into a known amount of solution to achieve the desired concentration and this can be done manually or by a dry feeder equipment.

The first aqueous solution can be water and the source of the water can be of any source, such as, purified, distilled, well water, municipal water, or other water sources.

The solid halogen releaser can be added to the aqueous solution or vice versa. A mixer can be used to disperse and/or better dissolve or disperse the solid halogen releaser in solution.

The halogen releaser can be considered an acting halogenating agent in the reaction to form the desired haloamine. The reaction can occur at faster rates with pHs above 7, such as a pH of 8 or higher.

As an option, the first aqueous solution with the dissolved halogen releaser(s) can have a pH of above 7, such as from about 8 to about 13, or from about 9 to about 12, or from about 10 to about 12, such as a pH between 10 and 11.

As an option, the pH of the first aqueous solution can be kept above 7 or well above 7, or even above a pH of 9. A base or two or more bases can be used to keep the pH above 7. Thus, and only as an example, if the pH of the aqueous solution, for instance by monitoring, is dropping to a pH below 8 or below 9, or below 10, the pH of the aqueous solution can be adjusted to above one of the pH levels. For instance, a base can be added to the aqueous solution, such as NaOH. The base(s) can be a solid or liquid or a solid pre-dissolved in a liquid. These can be added to the aqueous solution before, during, or after the solid halogen releaser(s) is dissolved in the aqueous solution.

As a more particular example, for instance, the chlorine releaser can be considered an acting chlorinating agent in the reaction to form the monochloramine as shown in some of the exemplary reaction schemes below. The reaction occurs quickest at a pH of 8 or higher.

The first aqueous solution with the dissolved chlorine releaser can have a pH of above 7, such as from about 8 to about 13, or from about 9 to about 12, or from about 10 to about 12, such as a pH between 10 and 11.

Preferably, to avoid any pH below 7, the pH of the first aqueous solution is kept above 7 or well above 7, and preferably above 9. If the pH of the aqueous solution, for instance by monitoring, is dropping to a pH below 8 or below 9, or below 10, the pH of the aqueous solution can be adjusted to above one of the pH levels. For instance, a base can be added to the aqueous solution, such as NaOH. The base(s) can be a solid or liquid or a solid pre-dissolved in a liquid. These can be added to the aqueous solution before, during, or after the solid chlorine releaser is dissolved in the aqueous solution. More details of the base and preparation of the aqueous solution are provided below.

Regarding step b), the second reactant can be free ammonia or an ammonium ion. The free ammonia in solution can be from ammonia gas or be an ammonia containing liquid. Thus, as an option, the second reactant is free ammonia, and step b) further comprises introducing ammonia gas or liquid into the second aqueous solution to form the free ammonia in the second aqueous solution. The ammonia gas or liquid can be pumped into the aqueous solution or any other technique to mix a gas or liquid with an aqueous liquid can be used. The concentration of the free ammonia in the second aqueous solution is from about 0.01 wt% to about 20 wt% (e.g. 0.01 wt% to 15 wt%, 0.1 wt% to 15 wt%, 0.5 wt% to 10 wt%, 1 wt% to 10 wt%). Metering equipment to meter in known or quantities of ammonia gas or liquid can be used.

Where the second reactant is the ammonium ion, then instead, step b) further comprises dissolving one or more solid ammonium salt(s) in the second aqueous solution to form the ammonium ion in the second aqueous solution. The ammonium salt, typically a solid, can be combined in the same fashion as the solid chlorine releaser is combined with the first aqueous solution. The concentration of the ammonium salt in the second aqueous solution can be from about 0.01 wt% to about 50 wt% (e.g., 0.01 wt% to 40 wt%, 0.01 wt% to 30 wt%, 0.1 wt% to 30 wt%, 1.0 wt% to 30 wt%, 1.0 wt% to 15 wt%) or other amounts. The solid ammonium salt can be metered into a known amount of solution to achieve the desired concentration and this can be done manually or by a dry feeder equipment.

Examples of ammonium salts that can be used include, but are not limited to, ammonium sulfate, ammonium nitrate, ammonium chloride, ammonium hydroxide, ammonium carbamate, ammonium bicarbonate, and ammonium bromide.

The second aqueous solution with the free ammonia or ammonium ion can have a pH of from about 4 to about 14, such as from about 5 to 12, or 6 to 12, or 7 to 12, or 8 to 12, or 8 to 14.

The term "aqueous solution" as used herein can, as an example, refer to a solution that is predominantly water (e.g., over 50% by volume water such as over 75% by volume, over 95% by volume, or over 99% by volume water) and retains the solution characteristics of water. Where the aqueous solution contains solvents in addition to water, water is typically the predominant solvent.

Once each of the first and second aqueous solutions are prepared, the two solutions can be combined. The combining of the two solutions can be done in any fashion to mix two solutions together. A mixer or blender can be used. It is important in the present invention to first prepare each dilute solution (the first aqueous solution and the second aqueous solution) and then combine so as to avoid any violent reactions of the reactants. The combining of the two solutions can be done using liquid metering equipment.

The amount of ammonia (in the form of free ammonia or ammonium ion) to the amount of the halogen releaser(s) can be in stochimetric amounts to form the haloamine without any residual ammonia. As an option, excess molar amount of the ammonia or ammonium ion can be used so as to ensure that all halogens from the halogen releaser is used in the formation of the haloamine and that excess ammonia is present to prevent or avoid unwanted by-product formation. The molar ratio of halogen releaser to the ammonia (or ammonium ion) can be a molar ratio of about 1:1 to about 1:4, or from about 1:1.1 to about 1:4, or from about 1:1.5 to about 1:3, or from about 1:2 to about 1:3.

Once the two solutions are combined, the haloamine(s) in solution is formed, for instance, immediately (e.g., within 30 seconds or less, within 15 seconds or less, within 5 seconds or less, or within 1 second or less) and can be used for biocidal treatments. As an option, the haloamine solution can be further diluted to any suitable concentration. The concentration of the haloamine (or mixture of haloamines) in solution can be from about 0.1 ppm to about 10,000 ppm or from about 1 ppm to about 10000 ppm (e.g., 10 ppm to 5,000 ppm, 10 ppm to 2,500 ppm, 10 ppm to 1,250 ppm, 10 ppm to 750 ppm, 10 ppm to 500 ppm, 10 ppm to 100 ppm) or any other ppm amount above or below any of these ranges or amounts. As an option, the pH of the reaction mixture (e.g., each aqueous solution and the combined aqueous solution) can remain or is alkaline throughout the process. As an option, the pH of the haloamine(s) in solution can be above a pH of 7, and can be from about 8 pH to about 13 pH, and preferably is from about 9 to about 12 pH, or from about 10 to about 11 pH.

As a particular example, as in the case of chlorine releasers, and the formation of MCA, the amount of ammonia (in the form of free ammonia or ammonium ion) to the amount of the chlorine releaser can be in stochimetric amounts to form the monochloramine without any residual ammonia. As an option, excess molar amount of the ammonia or ammonium ion can be used so as to ensure that all chlorine from the chlorine releaser is used in the formation of MCA and that excess ammonia is present to prevent or avoid unwanted by-product formation. The molar ratio of chlorine releaser to the ammonia (or ammonium ion) can be a molar ratio of about 1:1 to about 1:4, or from about 1:1.1 to about 1:4, or from about 1:1.5 to about 1:3, or from about 1:2 to about 1:3.

Once the two solutions are combined, the monochloramine (MCA) in solution is formed, generally immediately and can be used for biocidal treatments. As an option, the MCA solution can be further diluted to any suitable concentration. The concentration of the monochloramine in solution can be from about 0.1 ppm to about 10000 ppm or from about 1 ppm to about 10000 ppm (e.g., 10 ppm to 5,000 ppm, 10 ppm to 2,500 ppm, 10 ppm to 1,250 ppm, 10 ppm to 750 ppm, 10 ppm to 500 ppm, 10 ppm to 100 ppm) or any other ppm amount above or below any of these ranges or amounts.

Preferably, the pH of the reaction mixture (e.g., each aqueous solution and the combined aqueous solution) remains or is alkaline throughout the process.

The pH of the monochloramine in solution is above a pH of 7, and can be from about 8 pH to about 13 pH, and preferably is from about 9 pH to about 12 pH, or from about 10 pH to about 11 pH.

Examples of the reactions that can occur between the chlorine releaser and the ammonia source are provided below:

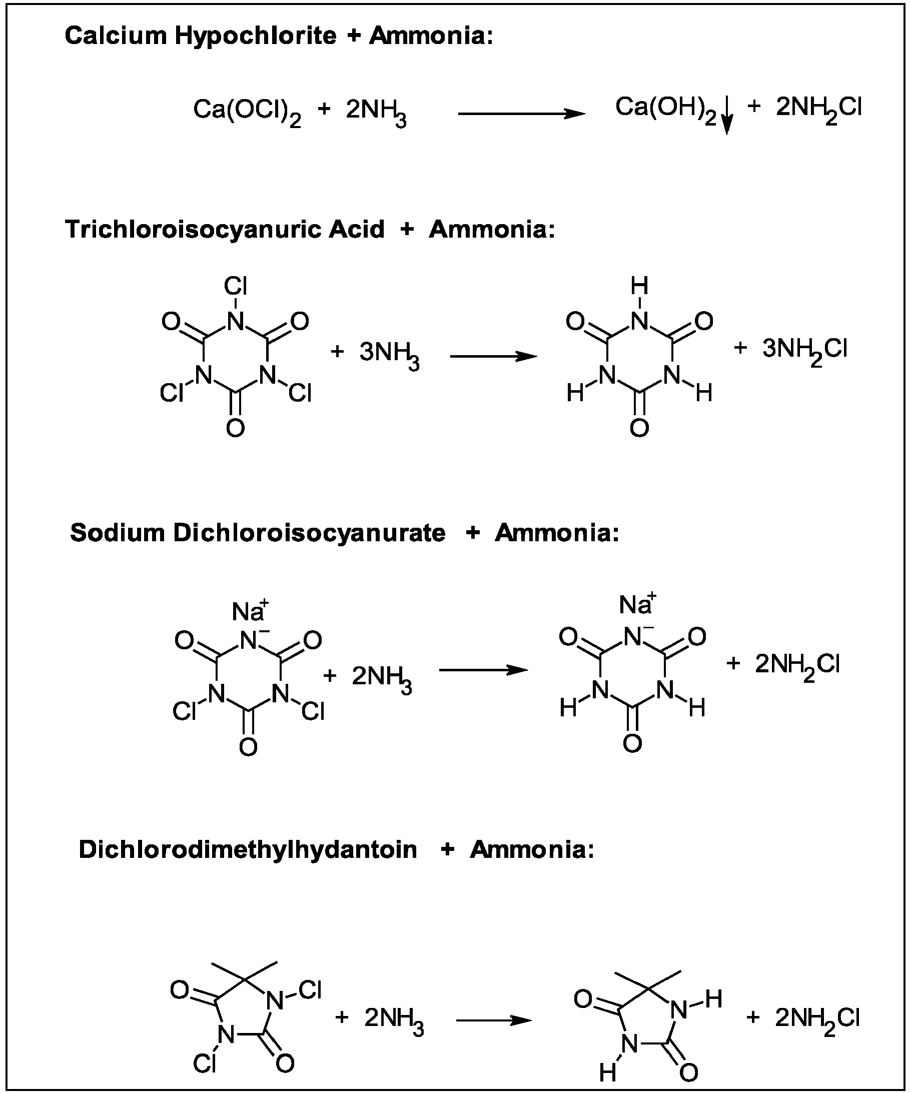

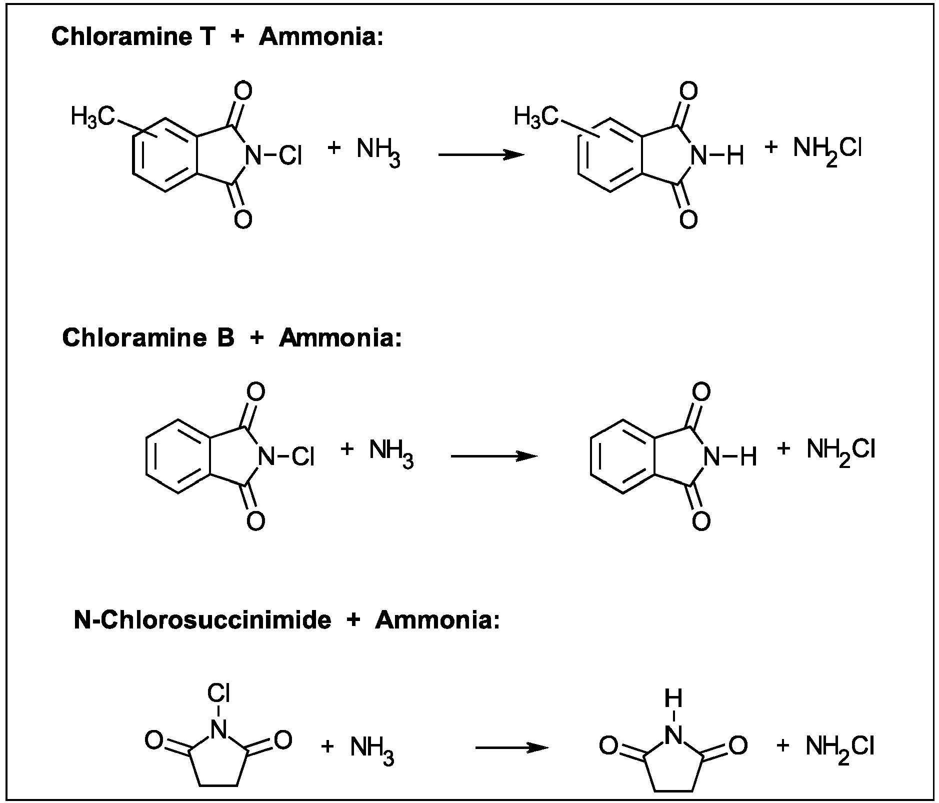

When the halogen releaser also contains a bromine releaser, the halogen releaser can dissolve in water or an aqueous solution and release HOBr, which in turn, reacts with the ammonia or ammonium ion to produce the bromamine (or bromoamine), e.g., NH₂Br.

One major advantage of the present invention is that the haloamine comprisinga monochloramine, is formed at the site of use and can be formed with minutes, or hours of use. In conventional methods, monochloramine is formed as a highly concentrated solution that is made off-site and transported to the user's site and then diluted as needed. The disadvantage of this approach is the expense of shipping a concentrated solution, and once monochloramine is formed, it begins to break down and form by-products such as chlorate ions. When the monochloramine is made on-site, again, generally highly concentrated solutions of MCA are made which poses many hazards. With the present invention, one or all of the reactants are solids which can be shipped to the user's site, instead of liquids. With the present invention, the reactants can be metered out as needed to form a dilute haloamine solution, such as a MCA solution or chloramine solution or mixture of halogens such as a bromamine and chloramine in solution. This process avoids the need to form highly concentrated haloamine solutions or highly concentrated reactant solutions. Essentially, with the present invention, since dilute solutions can be used, a safe and efficient process is used. Also, with the present invention, a haloamine such as MCA, can be formed on demand. Also, the reagents can be safely stored and/or do not break-down over time.

Regarding chloramines, and particularly MCA (but not limited to), since the chloramine(s) such as MCA, can be formed at the desired concentrations to be used for biocidal treatment, the process permits a chloramine solution, such as a MCA solution, to be formed that is in the substantial absence of any sodium hypochlorite and/or hypochlorite ions once the chloramine or MCA is formed in solution. For instance, the chloramine solution or MCA solution can have a chlorate ion amount of about 1 ppm or less or even 0.5 ppm or less, or non-detectable or zero.

Using a solution of a solid chlorine releaser like dichlorodimethylhydantoin, it is optional but preferred to add some additional alkalinity (e.g., as sodium or potassium hydroxide) to the solution. Adding a base is preferred because the dissolution of a solid chlorine releaser can lower the pH of the solution via the formation of hypochlorous acid (HOCl), which is a weak acid (pKa = 7.5), as shown in the reaction scheme below:

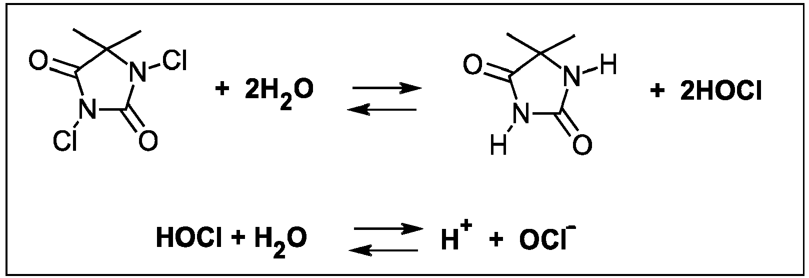

For that reason, the pH of the chlorine solution can be adjusted to a pH above 7, or above 8, and preferably to a pH of 10 or approximately 11 before it is combined with the ammonia solution to produce monochloramine.

A more particular example in the case of a chloramine can be as follows, appreciating that these steps and set-ups are just examples. The process of the present invention can involve the following steps:
- Dissolve a known amount of a chlorine-releasing solid chemical (e.g., dichlorodimethylhydantoin, trichloroisocyanuric acid, sodium dichloroisocyanuric acid, etc.) in a known volume of water. A solid-chemical feeder device may be use and the weight or volume of solid can be used as the basis for measuring out the chemical.
- Add sodium or potassium hydroxide to the solution until the pH is approximately 11, preferably 10.8-11.2. Liquid solutions of sodium or potassium hydroxide may be used, or pellets of these chemicals may be introduced via a solid-chemical feeder. The chlorine-releasing solid chemical and the sodium or potassium hydroxide may be fed simultaneously or sequentially to the mix tank or fed in any order.
- Dissolve a known amount of an ammonium salt (e.g., ammonium sulfate) in a known volume of water to prepare the ammonia-containing solution. Again, the solid-chemical feeder device may use the weight or volume of solid as the basis for measuring out the chemical. Alternatively, an aqueous product like BUSAN 1215 (Buckman, Inc.) containing a known concentration of total ammonia may be used instead.
- Inject the ammonia solution into a stream of dilution water so that the total ammonia concentration (NH₃ + NH₄⁺) in the water is 0.01-0.5 wt% as NH₃, preferably 0.03-0.1 wt% as NH₃.
- Inject the alkaline chlorine solution into the stream, ensuring that the final pH of the water is from about 10 to about 11.

Two examples of the type of equipment that may be used to implement this method for generating haloamines comprising monochloramine are shown below, again realizing that other set-ups can be utilized. These examples are presented as illustrations of the technology and are not intended to limit or exclude other designs or approaches that would serve the same purpose.

Referring to FIG. 1, using a solid-chemical feeder (11), a halogen-releasing solid chemical (13) comprising a chlorine-releasing solid chemical is introduced into a mix tank (15) containing dilution water, where the dilution water (e.g. aqueous solution) can be fed to the mix tank by any means (17). The solution in the tank is agitated by means of a motor-driven mixer (19) or other mixing device. The volume of water in the tank is known and is regulated by means of level switches (not shown). The amount of halogen-releasing solid chemical is known and is measured by the solid-chemical feeder using weight or volume. Control of the solid-chemical feeder and the water volume in the tank is provided either by a programmable controller (21) or by the facility's distributed control system (DCS) (not shown). The pH of the solution is measured by means of a pH monitor (23), the output of which is connected to the programmable controller, which also controls the solid chemical feeder (45) that feeds the solid sodium or potassium hydroxide from a supply (45) to the mix tank. Once the desired amount of halogen-releasing chemical has been added and the pH of the solution has been adjusted to the set pH, such as approximately a pH of 10 to 11, the solution is injected or otherwise introduced (31) into a stream of dilution water (25) that contains, as described below, the ammonia solution. This introduction can be done by way of a pump (27) that is connected to the programmable controller using for instance a control signal (29).

Upstream from this injection or introduction point (31), an aqueous solution of ammonia (33) is injected into a stream of dilution water so that the total ammonia concentration (NH₃ + NH₄⁺) in the water is from about 0.01-0.5 wt% as NH₃, preferably from about 0.03-0.1 wt% as NH₃. An ammonia solution tank (37) that can have a concentration of from about 0.01 wt% to about 40 wt% of ammonia can be outputted by way of a pump (35) to the dilution stream (25). The pumps (27 and 35) that inject the alkaline chlorine solution and the ammonia solution are both controlled by the programmable controller, which ensures that the solutions are combined in a molar ratio that provide at least a 1:1 (or greater) molar ratio of ammonia to halogen (e.g., chlorine and/or bromine) in the final mixture. The pH of the final solution of the haloamine (41) comprising MCA can be monitored via a monitor (39) to ensure that it is in the range of from about 10 to about 11. One or more mixers (43) (e.g., static mixers) in the line that has the dilution water (25) can be used.

As a further example, and referring to FIG. 2, a set-up using solid starting materials for each reactant can be used. For the solid halogen releaser almost the same set up as used in FIG. 1 except instead of a solid base, like NaOH, a liquid base is used, for instance, a NaOH solution in a tank (49) is used and pumped via a pump (51) to the mix tank (15). In preparing the NaOH solution, the chemical feeder arrangement used in FIG. 1 for the NaOH can be used to form the NaOH solution in the tank (49). In any of the examples, including FIG. 1 and FIG. 2, either or both of the liquid solutions (ammonia solution and/or sodium hydroxide solution) may be prepared on-site using solid forms of the chemicals, and using, for instance, chemical feeder arrangements as shown. As further shown in FIG. 2, a solid-chemical feeder (57) may be used to add ammonium salt (55) into the mix tank (61) that includes optionally a mixer (53). Dilution water (59) can be metered in, to obtain known volumes using, for instance, level switches and the like. Once the desired ammonia solution is prepared, the ammonia solution in mix tank (61) can be pumped via pump (35) to the dilution water stream. In this example, the use of dilution water (25) is completely optional, since the desired concentration of the two reactants may already be obtained via (33) and (31). Static mixer(s) (43) can be used to further combine or mix the reactants together.

As an option, with the process of the present invention, the haloamine solution is stable, for instance for at least 2 hours (e.g., 2 hours to 6 hours or more, or 2 hours to 4 hours or more), wherein the haloamine starting concentration initially formed does not change more than 15%, or not more than 10%, or not more than 5% in ppm haloamine concentration during this time period.

As a particular example, as an option, with the process of the present invention, the MCA solution is stable, for instance for at least 2 hours (e.g., 2 hours to 6 hours or more, or 2 hours to 4 hours or more), wherein the MCA starting concentration initially formed does not change more than 15%, or not more than 10%, or not more than 5% in ppm MCA concentration during this time period.

Also, with the present invention, the MCA solution formed can be essentially free, or free of other chloramine compounds, such as dichloramine and/or nitrogen trichloride, such as below 10 ppm or about 0 ppm or 0 ppm.

Once the haloamine solution (e.g., MCA solution, or chloramine solution) is formed from the process of the present invention, the haloamine solution can be applied to the area to be treated, which can be a surface or solution or medium for biocidal control. The surface or solution can be any surface or solution that typically receives MCA treatment or other haloamine treatment. The haloamine solution (e.g., MCA aqueous solution) can be used in a method for controlling the growth of at least one microorganism in or on a product, material, or medium susceptible to attack by the microorganism. This method includes the step of adding to, applying to, or otherwise contacting the product, material, or medium with the haloamine solution.

For instance, the surface or solution can be a food processing plant, sugar mill, paper mill, or fiberglass insulation plant.

As other examples, the surface or solution can be a material or medium, such as, wood pulp or paper, wood chips, lumber, paints, leathers, adhesives, coatings, animal hides, tanning liquor, paper mill liquor, fiberglass, dairy processing, poultry processing, meat packing facilities, meat processing, metalworking fluids, petrochemicals, pharmaceutical formulations, cooling water, recreational water, dyes, clays, mineral slurries, cationic surfactants, formulations with cationic surfactants, influent water, waste water, pasteurizers, retort cookers, cosmetic formulations, toiletry formulations, textiles, geological, drilling lubricants, agrochemical compositions for crop or seed protection, sugar beet and/or sugar cane processing, flour and/or starch processing, bioethanol production and/or processing (e.g., any one or more steps such as wet grinding), dry grinding processing in ethanol production, cellulosic processes, and any food and/or beverage production and/or processing.

The surface can be a surface, device, and/or machinery utilized in meat, vegetable, or fruit preparation or processing or packing, including, but not limited to, the items mentioned herein.

The haloamine aqueous solution, such as the monochloramine aqueous solution, is useful in preserving various type of products, media, or materials susceptible to attack by at least one microorganism. The use of the haloamine solution, such as the monochloramine solution, is useful in agrochemical formulations for the purpose of protecting seeds or crops against microbial spoilage. These methods of preserving and protecting are accomplished by adding or otherwise contacting the haloamine aqueous solution to the products, media, or materials in an amount that can preferably be microbicidally to preserve or control the products, media, or materials from attack by at least one microorganism or to effectively protect the seeds or crops against microbial spoilage.

The use of the haloamine solution (e.g., MCA solution) can be used to treat or preserve aqueous systems, such as ones subject to microbiological growth, attack, and degradation. These aqueous systems may be or include, but are not limited to, fresh, brackish or saltwater systems. Exemplary aqueous systems include, but are not limited to, latexes, surfactants, dispersants, stabilizers, thickeners, adhesives, starches, waxes, proteins, emulsifying agents, cellulose products, metal working fluids, cooling water, waste water, aqueous emulsions, aqueous detergents, coating compositions, paint compositions, and resins formulated in aqueous solutions, emulsions or suspensions. Additionally, with the present invention, microbiological deterioration of aqueous systems can be prevented or controlled including, but not limited to, related water-handling system, which may include cooling towers, pumps, heat exchangers, and pipelines, heating systems, scrubbing systems, and other similar systems, and the like.

The haloamine solution (e.g., MCA solution) can be used to protect or treat or preserve foods and/or surfaces in contact with food, such as fresh foods (e.g., vegetables and fruits) or meats, or dairy products or processing, for instance, to extend shelf life. The present invention can be used to protect or treat facilities that process food (meats, fruits, vegetables) including, but not limited to, the surfaces and machinery and devices that come into contact with the food or animal. Particular examples include, but are not limited to, sugar beet, sugar cane, corn, flour, starch containing foods, sugar containing foods and the like.

The haloamine solution (e.g., MCA solution) can be useful in agrochemical formulations for the purpose of protecting seeds or crops against microbial spoilage.

The pH of the haloamine prepared solutions (e.g., the MCA prepared aqueous solution) can be from about 8 to about 12, such as from about 9 to about 12, or from 9 to 11.5, or from 10 to 12, or from about 10 to about 11. The aqueous solution can further include least one pH control agent, such as at least one base or at least one acid, and as indicated, the pH control agent, if used, will generally be at least one base. The aqueous solution can include at least one base, such as sodium hydroxide and/or other base. The addition or presence of at least one base along with the monochloramine in the aqueous solution can provide optimal control of pathogenic bacteria.

The aqueous haloamine solution may comprise, consist essentially of, consist of, or include a haloamine comprising a monochloramine in solution and a dehalogenated organic compound in solution. The dehalogenated organic compound is a reference to a halogen releaser(s) that has exchanged one or all of the halogens on the halogen releaser compound for another molecule which typically is a hydrogen atom.

An aqueous monochloramine solution may comprise, consist essentially of, consist of, or include a monochloramine in solution and a dechlorinated organic compound in solution. The dechlorinated organic compound is a reference to a chlorine releaser that has exchanged one or all of the chlorines on the chlorine releaser compound for another molecule which typically is a hydrogen atom.

Examples of dechlorinated organic compounds include, but are not limited to, calcium hydroxide, triisocyanuric acid, sodium diisocyanurate, dihydrogendimethylhydantoin, Amine T, Amine B, or N-succinimide, or any combinations thereof.

The chemical properties, amounts, and other parameters detailed above and throughout the application for the haloamine solution can apply equally to the aqueous haloamine solution product as well.

Also, the chemical properties, amounts, and other parameters detailed above and throughout the application for the MCA solution can apply equally to the aqueous monochloramine solution product as well.

The aqueous haloamine solution can have a concentration of from about 0.1 ppm to about 10,000 or from about 10 ppm to about 10000 ppm, and the dehalogenated organic compound can have a concentration of from about 1 ppm to about 5,000 ppm, or from about 0.1 ppm to 5,000 ppm, or from about 0.01 ppm to about 5,000 ppm, or from about 0.05 ppm to about 5000 ppm, or from about 5 ppm to about 5000 ppm (e.g., 5 ppm to 2500 ppm, 5 ppm to 1250 ppm, 5 ppm to 750 ppm, 10 ppm to 500 ppm, 25 ppm to 250 ppm).

As a particular example, the aqueous monochloramine solution can have a concentration of from about 0.1 ppm to about 10000 ppm or from about 10 ppm to about 10000 ppm, and the dechlorinated organic compound can be at a concentration of from about 1 ppm to about 5,000 ppm, or from about 0.1 ppm to 5,000 ppm, or from about 0.01 ppm to about 5,000 ppm, or from about 0.05 ppm to about 5000 ppm, or from about 5 ppm to about 5000 ppm (e.g., 5 ppm to 2500 ppm, 5 ppm to 1250 ppm, 5 ppm to 750 ppm, 10 ppm to 500 ppm, 25 ppm to 250 ppm).

The aqueous monochloramine solution can have 1 ppm or less of chlorate ions, such as from about 0 ppm to 1 ppm, or from about 0.1 ppm to 0.9 ppm.

The aqueous haloamine solution can consist essentially of or consist of the haloamine in solution and the dehalogenated organic compound in solution. The aqueous haloamine can be in the absence of any other actives.

As a particular example, the aqueous monochloramine solution can consist essentially of or consist of the monochloramine in solution and the dechlorinated organic compound in solution. The aqueous monochloramine can be in the absence of any other actives.

As used herein, controlling or inhibiting the growth of at least one microorganism includes the reduction and/or the prevention of such growth.

It is to be further understood that by "controlling" (i.e., preventing) the growth of at least one of microorganism, the growth of the microorganism is inhibited. In other words, there is no growth or essentially no growth of the microorganism. "Controlling" the growth of at least one microorganism maintains the microorganism population at a desired level, reduces the population to a desired level (even to undetectable limits, e.g., zero population), and/or inhibits the growth of the microorganism. Thus, products, material, or media susceptible to attack by the at least one microorganism can be preserved from this attack and the resulting spoilage and other detrimental effects caused by the microorganism. Further, it is also to be understood that "controlling" the growth of at least one microorganism also includes biostatically reducing and/or maintaining a low level of at least one microorganism such that the attack by the microorganism and any resulting spoilage or other detrimental effects are mitigated, i.e., the microorganism growth rate or microorganism attack rate is slowed down and/or eliminated.

As indicated, at least one base can be present or included in either the method of forming the aqueous solutions or the formed haloamine solution (e.g. MCA solution), for instance, to adjust, e.g., fine-tune, the pH for optimal effect of the haloamine (e.g. MCA) from a biocidal efficiency standpoint, or cost perspective, or both. Any base can be used herein as a pH-adjusting adjunct for adjusting the pH (e.g., increasing pH). The base can be an alkali metal hydroxide, alkaline earth metal hydroxide, or any combination thereof. The base can be sodium hydroxide, potassium hydroxide, calcium hydroxide, barium hydroxide, magnesium hydroxide, sodium carbonate, or any combination thereof. Preferred bases for pH adjustment can include water-soluble alkalis such as sodium hydroxide, potassium hydroxide, or mixtures thereof. The base can be used as an aqueous solution. The base can be added to the aqueous solution before treatment of a product, material or medium, and/or can be added to the product, material or medium before or after treatment with the aqueous solution, or both. As indicated, the base can be used as a pH control agent. If desirable to reduce the pH, a pH control agent can be used which is at least one acid. The at least one acid, if used, can be acetic acid, citric acid, hydrochloric acid, sulfuric acid, or other acids, or alum, or any combination thereof.

The amount of base added can be the amount needed to adjust the aqueous solution to the desired pH value or range. The concentration of the base can be any commercially available concentration (e.g., 0.1 N or 0.01N, or concentrated base) and/or can be diluted to any desired or appropriate concentration.

The mode as well as the rates of application of the aqueous solution of this invention could vary depending upon the intended use. The aqueous solution could be applied by spraying or brushing onto the material or product. The material or product in question could also be treated by dipping in a suitable formulation of the aqueous solution. In a liquid or liquid-like medium, the aqueous solution could be added into the medium by pouring, or by metering with a suitable device so that a solution or a dispersion of the aqueous solution can be produced.

The following examples are intended to illustrate, not limit, the present invention.

### EXAMPLES

### Example 1

An experiment was conducted to test the feasibility of a method of the present invention. In this experiment the chlorine-releaser was granular Dantochlor (DCDMH), and the ammonium source was BUSPERSE 2454 (already in the form of an aqueous ammonium sulfate). A one liter aqueous solution containing 0.1 wt% Dantochlor was prepared. This aqueous solution was adjusted to a pH of 11.2 using NaOH (50%). The solubility of Dantochlor was 0.43% (w/w). The Cl₂ content of the solution was measured instantly:
- Free Cl₂: 274 ppm Cl₂
- Total Cl₂: 600 ppm Cl₂

A molar equivalent amount of BUSPERSE 2454 was ±0.7 ml for a one liter solution. A 30% molar overdosage was used and thus, 1 ml of BUSPERSE 2454 was added to the aqueous solution of Dantochlor. The combined solution had the following characteristics:
- pH: 10.8
- Free Cl₂: 2.6 ppm Cl₂
- Total Cl₂: 550 ppm Cl₂
- MCA: 204 ppm NH₂Cl

These parameters were remeasured after 1 hour:
- pH: 10.7
- Free Cl₂: 5.2 ppm Cl₂
- Total Cl₂: 600 ppm Cl₂
- MCA: 218 ppm NH₂Cl

The molar excess of the ammonium sulfate ensured excess ammonia in order to prevent unwanted by-product formation.

Using Ion Chromatography, the concentration of chlorate ion in this generated MCA solution (200 ppm) was found to be very low, approximately 1 ppm. The chlorate ion concentration was also analyzed for various aqueous solutions of the Dantochlor product (1.5 - 72 ppm); chlorate ion was not detected above the method's detection limit of 0.5 ppm.

When an amount, concentration, or other value or parameter is given as either a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

## Claims

1. A method to prepare a haloamine, said method comprising:
a) dissolving at least one solid halogen releaser in a first aqueous solution to form a dilute first reactant;
b) preparing a second reactant of free ammonia or ammonium ion in a second aqueous solution to form a dilute second reactant; and
c) combining the dilute first reactant and the dilute second reactant to form said haloamine in solution;
wherein said haloamine comprises a monochloramine, said solid halogen releaser comprises a solid chlorine releaser, and wherein concentration of chlorine releaser in said first aqueous solution is from about 0.01 wt% to about 10 wt%, and concentration of said ammonia or ammonium ion in said second aqueous solution is from about 0.01 wt% to about 20 wt%.

2. The method of claim 1, wherein said haloamine consists of a monochloramine.

3. The method of claim 1 or claim 2, wherein said solid chlorine releaser comprises calcium hypochlorite, trichloroisocyanuric acid, sodium dichloroisocyanurate, dichlorodimethylhydantoin, Chloramine T, Chloramine B, or N-chlorosuccinimide, or any combinations thereof.

4. The method of any of claims 1 to 3, wherein said second reactant is the free ammonia, and said step b) further comprises introducing ammonia gas into said second aqueous solution to form said free ammonia in said second aqueous solution.

5. The method of any of claim 1 to 3, wherein said second reactant is the ammonium ion, and said step b) further comprises dissolving a solid ammonium salt in said second aqueous solution to form said ammonium ion in said second aqueous solution.

6. The method of any preceding claim, wherein said method is in the absence of any sodium hypochlorite or hypochlorite ions once the monochloramine is formed.

7. The method of any preceding claim, wherein said monochloramine in solution has a chlorate ion amount of 1 ppm or less.

8. The method of any preceding claim, wherein said first aqueous solution has a pH of from 6 to 13, and the second aqueous solution has a pH of from 6 to 13.

9. The method of any preceding claim, wherein the monochloramine in solution is present at a concentration of from about 0.1 ppm to about 10000 ppm.

10. The method of any preceding claim, wherein the monochloramine in solution is present at a pH of from about 6 to about 13.

11. The method of any preceding claim, wherein the first aqueous solution has a pH of above 7.

12. The method of any preceding claim, wherein a base is added to the first aqueous solution.

13. The method of claim 12, wherein the base is NaOH.

## Patentansprüche

1. Verfahren zum Herstellen eines Haloamins, wobei das Verfahren umfasst:
a) Auflösen mindestens eines festen Halogenfreisetzers in einer ersten wässrigen Lösung, um einen verdünnten ersten Reaktanten zu bilden;
b) Herstellen eines zweiten Reaktanten aus freiem Ammoniak oder Ammoniumion in einer zweiten wässrigen Lösung, um einen verdünnten zweiten Reaktanten zu bilden; und
c) Kombinieren des verdünnten ersten Reaktanten und des verdünnten zweiten Reaktanten, um das Haloamin in Lösung zu bilden;
wobei das Haloamin ein Monochloramin umfasst, der feste Halogenfreisetzer einen festen Chlorfreisetzer umfasst, und wobei Konzentration des Chlorfreisetzers in der ersten wässrigen Lösung von etwa 0,01 Gew.-% bis etwa 10 Gew.-% beträgt und Konzentration des Ammoniaks oder Ammoniumions in der zweiten wässrigen Lösung von etwa 0,01 Gew.-% bis etwa 20 Gew.-% beträgt.

2. Verfahren nach Anspruch 1, wobei das Haloamin aus einem Monochloramin besteht.

3. Verfahren nach Anspruch 1 oder Anspruch 2, wobei der feste Chlorfreisetzer Calciumhypochlorit, Trichlorisocyanursäure, Natriumdichlorisocyanurat, Dichlordimethylhydantoin, Chloramin T, Chloramin B oder N-Chlorsuccinimid oder beliebige Kombinationen davon umfasst.

4. Verfahren nach einem der Ansprüche 1 bis 3, wobei der zweite Reaktant das freie Ammoniak ist und der Schritt b) weiter Einführen von Ammoniakgas in die zweite wässrige Lösung umfasst, um das freie Ammoniak in der zweiten wässrigen Lösung zu bilden.

5. Verfahren nach einem der Ansprüche 1 bis 3, wobei der zweite Reaktant das Ammoniumion ist und der Schritt b) weiter Auflösen eines festen Ammoniumsalzes in der zweiten wässrigen Lösung umfasst, um das Ammoniumion in der zweiten wässrigen Lösung zu bilden.

6. Verfahren nach einem vorstehenden Anspruch, wobei das Verfahren in Abwesenheit jeglichen Natriumhypochlorits oder jeglicher Hypochloritionen ist, sobald das Monochloramin gebildet ist.

7. Verfahren nach einem vorstehenden Anspruch, wobei das Monochloramin in Lösung eine Chlorationenmenge von 1 ppm oder weniger aufweist.

8. Verfahren nach einem vorstehenden Anspruch, wobei die erste wässrige Lösung einen pH-Wert von 6 bis 13 aufweist und die zweite wässrige Lösung einen pH-Wert von 6 bis 13 aufweist.

9. Verfahren nach einem vorstehenden Anspruch, wobei das Monochloramin in Lösung bei einer Konzentration von etwa 0,1 ppm bis etwa 10000 ppm vorhanden ist.

10. Verfahren nach einem vorstehenden Anspruch, wobei das Monochloramin in Lösung bei einem pH-Wert von etwa 6 bis etwa 13 vorhanden ist.

11. Verfahren nach einem vorstehenden Anspruch, wobei die erste wässrige Lösung einen pH-Wert über 7 aufweist.

12. Verfahren nach einem vorstehenden Anspruch, wobei eine Base zu der ersten wässrigen Lösung hinzugefügt wird.

13. Verfahren nach Anspruch 12, wobei die Base NaOH ist.

## Revendications

1. Procédé de préparation d'une haloamine, ledit procédé comprenant les étapes consistant à :
a) dissoudre au moins un libérateur solide d'halogène dans une première solution aqueuse pour former un premier réactif dilué ;
b) préparer un second réactif d'ammoniac libre ou d'ion ammonium dans une seconde solution aqueuse pour former un second réactif dilué ; et
c) combiner le premier réactif dilué et le second réactif dilué pour former ladite haloamine en solution ;
dans lequel ladite haloamine comprend une monochloramine, ledit libérateur solide d'halogène comprend un libérateur solide de chlore, et dans lequel la concentration du libérateur de chlore dans ladite première solution aqueuse est d'environ 0,01 % en poids à environ 10 % en poids, et la concentration dudit ammoniac ou ion ammonium dans ladite seconde solution aqueuse est d'environ 0,01 % en poids à environ 20 % en poids.

2. Procédé selon la revendication 1, dans lequel ladite haloamine consiste en une monochloramine.

3. Procédé selon la revendication 1 ou la revendication 2, dans lequel ledit libérateur solide de chlore comprend de l'hypochlorite de calcium, de l'acide trichloroisocyanurique, du dichloroisocyanurate de sodium, de la dichlorodiméthylhydantoïne, de la chloramine T, de la chloramine B, ou du N-chlorosuccinimide, ou n'importe quelle combinaison de ceux-ci.

4. Procédé selon l'une quelconque des revendications 1 à 3, dans lequel ledit second réactif est l'ammoniac libre, et ladite étape b) comprend en outre l'introduction d'ammoniac gazeux dans ladite seconde solution aqueuse pour former ledit ammoniac libre dans ladite seconde solution aqueuse.

5. Procédé selon l'une quelconque des revendications 1 à 3, dans lequel ledit second réactif est l'ion ammonium, et ladite étape b) comprend en outre la dissolution d'un sel d'ammonium solide dans ladite seconde solution aqueuse à partir dudit ion ammonium dans ladite seconde solution aqueuse.

6. Procédé selon une quelconque revendication précédente, dans lequel ledit procédé est en l'absence d'hypochlorite de sodium ou d'ions hypochlorite une fois que la monochloramine est formée.

7. Procédé selon une quelconque revendication précédente, dans lequel ladite monochloramine en solution présente une quantité d'ion chlorate de 1 ppm ou moins.

8. Procédé selon une quelconque revendication précédente, dans lequel ladite première solution aqueuse présente un pH de 6 à 13, et la seconde solution aqueuse présente un pH de 6 à 13.

9. Procédé selon une quelconque revendication précédente, dans lequel la monochloramine en solution est présente à une concentration d'environ 0,1 ppm à environ 10 000 ppm.

10. Procédé selon une quelconque revendication précédente, dans lequel la monochloramine en solution est présente à un pH d'environ 6 à environ 13.

11. Procédé selon une quelconque revendication précédente, dans lequel la première solution aqueuse présente un pH supérieur à 7.

12. Procédé selon une quelconque revendication précédente, dans lequel une base est ajoutée à la première solution aqueuse.

13. Procédé selon la revendication 12, dans lequel la base est NaOH.
